# EUROPEAN PATENT APPLICATION

(11) **EP 2 475 215 A1**
(43) Date of publication of application: **11.07.2012**
(21) Application number: 11193374.3
(22) Date of filing: 13.12.2011
(51) Int. Cl.: H04W 76/04

(54) **Operating a dual SIM card terminal**

(30) Priority: 06.01.2011 KR 20110001236
(71) Applicant: Samsung Electronics Co., Ltd., Suwon-si, Gyeonggi-do (KR)
(72) Inventor: Hwang, Sun Ho, Gyeonggi-do (KR)
(74) Representative: Jenkins, Richard Gavin

(57) **Abstract**

A method for operating a dual Subscriber Identity Module (SIM) card terminal is provided. The method includes performing a camping process based on a first SIM card by a terminal including a plurality of SIM cards, requesting a call switch so that a communication message, which is transmitted to at least one other SIM card that does not currently support a communication function, is transmitted to the first SIM card by the terminal, and call-switching a communication message, which is transmitted to at least one other SIM card, so that the communication message is transmitted to the first SIM card by a network system according to the call switch request.

## Description

### BACKGROUND OF THE INVENTION

### 1. Field of the Invention:

The present invention relates to a dual Subscriber Identity Module (SIM) card terminal. More particularly, the present invention relates to a communication operating method of a dual SIM card terminal capable of supporting a call switch of a certain SIM card included in the dual SIM card terminal, and a dual SIM card terminal and network system supporting the same.

### 2. Description of the Related Art:

Generally, a SIM card is a subscriber authentication module card, stores personal information in order to provide various services, such as subscriber authentication, charging, and security function as a module of a card format that can be used in a portable terminal. Such a SIM card has been developed so that users can freely use mobile communication using their phone number anywhere regardless of mobile communication technology standards, such as Code Division Multiple Access (CDMA), Global System for Mobile communication (GSM), and the like. Furthermore, among SIM cards, a subscriber identity module of the Universal Mobile Telecommunication System (UMTS) of the third generation mobile communication is called a Universal Subscriber Identity Module (USIM).

Such a SIM card can be manufactured in the form of a smart card, and can be inserted into a portable terminal. A portable terminal, into which a SIM card has been inserted, performs an initialization process including an authentication process by reading subscriber information stored in the SIM card when the portable terminal is booted. Furthermore, the portable terminal is available only for an authenticated SIM card.

Generally, a portable terminal including one SIM card is mainly used, but recently, a portable terminal, which can be coupled with two SIM cards, (hereinafter, called a "dual SIM card terminal") is being introduced. The dual SIM card terminal can be coupled with two SIM cards, and in such a case, the used SIM card can be switched according to a user's selection signal. That is, a user can use two phone numbers using one terminal coupled with two SIM cards.

However, even though two phone numbers are used, a call can actually be connected using only one SIM card, and in the state where a call is connected by one SIM card, the call function of the other SIM card cannot be activated. Thus the call function is performed only by the SIM card, which maintains the call connection state, unless the user specifies the other SIM card. Because of such a restriction, even though there is an important call coming in through the phone number registered by the non-activated SIM card, the terminal user will not even know that there was an incoming call, which is a significant inconvenience to the user.

Therefore, a need exists for a communication operating method of a dual SIM card terminal capable of supporting a call switch of a certain SIM card included in the dual SIM card terminal, and a dual SIM card terminal and network system supporting the same.

### SUMMARY OF THE INVENTION

Aspects of the present invention are to address at least the above-mentioned problems and/or disadvantages and to provide at least the advantages described below. Accordingly, an aspect of the present invention is to provide a communication operating method of a dual Subscriber Identity Module (SIM) card terminal capable of supporting a call switch of a certain SIM card, whose call function is inactivated, to an activated SIM card, and a dual SIM card terminal and a network system supporting the same.

In accordance with an aspect of the present invention, a method for operating a dual SIM card terminal is provided. The method includes performing a camping process based on a first SIM card by a terminal including a plurality of SIM cards, requesting a call switch so that a communication message, which is transmitted to at least one other SIM card that does not currently support a communication function, is transmitted to the first SIM card by the terminal, and call-switching a communication message, which is transmitted to at least one other SIM card, so that the communication message is transmitted to the first SIM card by a network system according to the call switch request.

In accordance with another aspect of the present invention, a dual SIM card terminal is provided. The dual SIM card terminal includes a wireless communication unit for supporting a communication function, a plurality of SIM cards that perform a camping to a base station and provide information for supporting a communication function based on the wireless communication unit, and a SIM card interface that provides space into which the plurality of SIM cards can be inserted, and a signal line for communication between the plurality of SIM cards and a controller, wherein the controller performs a base station search and camping based on a first SIM card selected according to preset information and input signals among the plurality of SIM cards which have been inserted into the SIM card interface, and transmits a message, which requests a call switch so that a communication message, which is transmitted to at least one other SIM card exempting the first SIM card, is transmitted based on the first SIM card, to the base station.

In accordance with another aspect of the present invention, a network system for supporting a call switch of a dual SIM card terminal is provided. The network system includes a base station that forms a communication channel with a certain SIM card included in the dual SIM card terminal, and a mobile service center for transmitting a communication message, which is supposed to be transmitted to at least one other SIM card exempting the certain SIM card, to the phone number of the certain SIM card according to the request of the dual SIM card terminal.

According to an exemplary method for operating a communication function of a dual SIM card terminal, and a dual SIM card terminal and network system supporting the same, even though a certain SIM card is being operated, a communication function transmitted to the other inactivated SIM card can also be managed together according to a user's selection.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates a configuration of a system for operating a dual Subscriber Identity Module (SIM) card terminal according to an exemplary embodiment of the present invention;

FIG. 2 is a block diagram illustrating a configuration of a dual SIM card terminal according to an exemplary embodiment of the present invention;

FIG. 3 is a flowchart illustrating a method for operating a dual SIM card terminal according to an exemplary embodiment of the present invention;

FIG. 4 is a flowchart illustrating a method for operating an automatic call switch of a network system according an exemplary embodiment of the present invention; and

FIG. 5 illustrates a screen interface according to a call switch operation according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

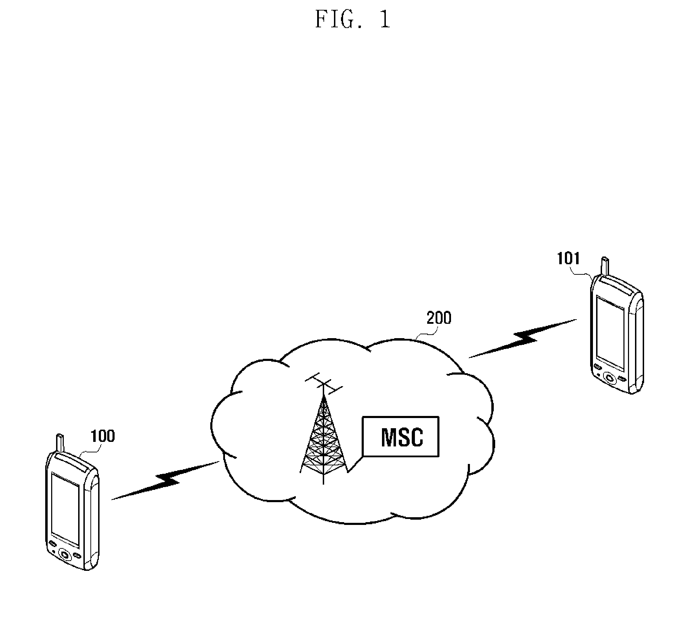

FIGs. 1 through 5, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

FIG. 1 illustrates a configuration of a system for operating a dual Subscriber Identity Module (SIM) card terminal according to an exemplary embodiment of the present invention.

Referring to FIG. 1, a dual SIM card terminal operating system may include a dual SIM card terminal 100, a network system 200 and a portable terminal 101.

The dual SIM card terminal operating system supports the dual SIM card terminal 100 to register information that indicates that the terminal is a dual SIM card terminal while performing registration in the network system 200 after camping on the network system 200. As such, the network system 200 can recognize in advance that the camped-on certain terminal is a dual SIM card terminal 100. In addition, in a case where the portable terminal 101 requests a call connection based on a phone number registered in a certain SIM card of the dual SIM card terminal 100, the network system 200 can determine whether the dual SIM card terminal having the SIM card is operating a communication function based on the SIM card, and connect the call to the dual SIM card terminal 100 having the SIM card. When the dual SIM card 100 having the SIM card is operating a communication function based on the other SIM card, the network system 200 can switch the call connection requested by the portable terminal 101 to the dual SIM card terminal 100 operating the other SIM card. As such, the dual SIM card operating system can determine and manage all the call functions transmitted to SIM cards held by user according to a user's setting regardless of the SIM cards.

To this end, the network system 200 may include a base station for forming a communication channel with the dual SIM card terminal 100 and the portable terminal 101, and a Mobile Service Center (MSC) for supporting a mobile service. The base station plays a role of transmitting and receiving signals for supporting a communication service with the dual SIM card terminal 100 and the portable terminal 101. The mobile service center manages registration according to the camping process of the portable terminal 101 and the dual SIM card terminal 100 to a certain base station, and in a case where the portable terminal 101 requests a call connection to the dual SIM card terminal 100, or the dual SIM card terminal 100 requests a call connection to the portable terminal 101, the mobile service center supports a call switching according to the call connection request. More particularly, in a case where the dual SIM card terminal 100 performs a camping process by searching a certain base station, the mobile service center can receive information from the dual SIM card terminal 100, which indicates that the terminal is a dual SIM card terminal. The mobile service center of the network system 200 can register at least one other SIM card information together for a certain SIM card, which performs a camping on, based on the received information. In this process, the mobile service center can confirm which SIM card is activated among SIM cards of the dual SIM card terminal 100 through the camping on process.

Thereafter, if a communication message, for example, a call connection request, is received to the phone number of an activated SIM card from the portable terminal 101, the mobile service center can transmit the call connection request to the dual SIM card terminal 100 having the SIM card. Here, the communication message can be one of a call connection message or a message for supporting a message service. Furthermore, if a call connection request is received to the phone number of a SIM card, whose communication function is inactivated, from the portable terminal 101, the mobile service center can switch the call to the phone number of the currently activated SIM card by determining the SIM card information and the stored information, and the mobile service center can transmit the call connection request to the dual SIM card terminal 100. At this time, the mobile service center of the network system 200 can transmit information, which indicates that the call is a switched call, that is, the call connection request has been made to at least one other SIM card, to the dual SIM card terminal 100.

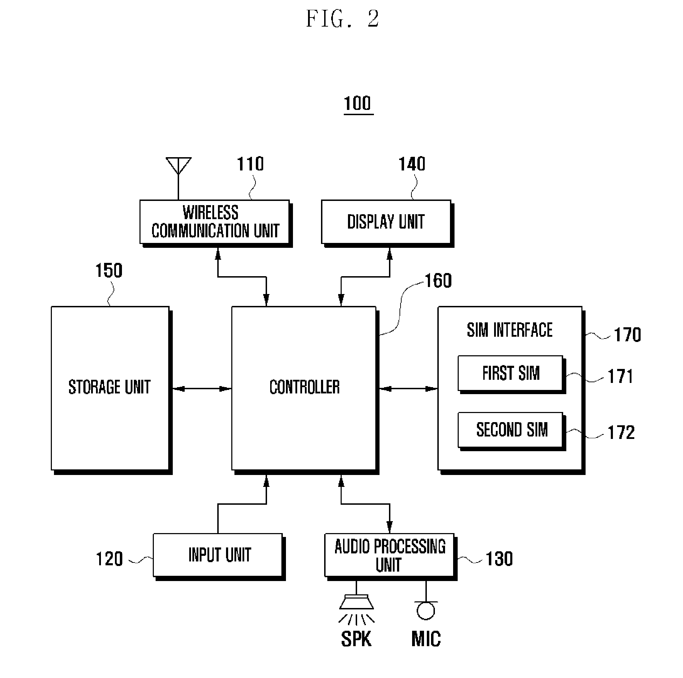

The dual SIM card terminal 100 can activate a communication function based on one of the plurality of SIM cards inserted according to a user's request or schedule information which is set as a default value. At this time, the dual SIM card terminal 100 can transmit information, which indicates that the terminal operates a dual SIM card, to the network system 200. In addition, when a call connection request is received to a phone number of at least one other SIM card exempting the currently activated SIM card, the dual SIM card terminal 100 can transmit information of a request to switch the call connection request to the phone number of the currently switched SIM card to the network system 200. Thereafter, if a call connection request is received from the network system 200, the dual SIM card terminal 100 can indicate the reception of the call to user, and can perform the call connection or rejection according to a user's control. To this end, the dual SIM card terminal 100 can include a configuration illustrated in FIG. 2.

The portable terminal 101 has a configuration that can perform a call connection request to the dual SIM card terminal 100 or receive a call connection request of the dual SIM card terminal 100 through the network system 200. Such a portable terminal 101 can operate one SIM card or a plurality of SIM cards as in the dual SIM card terminal 100. Furthermore, in the above description, a portable terminal 101 with portability has been used as an example, but it is possible to use a phone using the Public Switched Telephone Network (PSTN), an Internet phone, and the like.

FIG. 2 is a block diagram illustrating a configuration of a dual SIM card terminal according to an exemplary embodiment of the present invention.

Referring to FIG. 2, the dual SIM card terminal 100 may include a wireless communication unit 110, an input unit 120, an audio processing unit 130, a display unit 140, a storage unit 150, a SIM interface 170 and a controller 160, and a first SIM card 171 and a second SIM card 172 that can be inserted into the SIM interface 170. In the description below, the plurality of SIM cards will be limited to two SIM cards for explanatory purpose. However, exemplary embodiments of the present invention are not limited to two SIM cards, and it is possible to have more than two SIM cards. When more than two SIM cards are used, the SIM interface 170 can be manufactured in a form into which the corresponding number of SIM cards can be inserted.

The dual SIM card terminal 100 having such a configuration can be activated to operate a communication function by a certain SIM card, for example, the first SIM card 171, according to a user's request or schedule information in the state where both the first SIM card and the second SIM card 172 are inserted into the SIM interface 170. The dual SIM card terminal 100 can perform a camping process to the network system 200 based on unique identification information of the first SIM card 171, and can transmit information, which indicates that the terminal is a terminal that operates dual SIM cards, and unique identification information of the second SIM card 172 or phone number information registered as the second SIM card to the network system 200. When the network system 200 manages and operates the second SIM card 172 information, that is, the network system 200 manages first SIM card 171 information related to the second SIM card 172, the dual SIM card terminal 100 may not transmit separate second SIM card 172 information or phone number information registered by the second SIM card 172. Thereafter, the dual SIM card terminal 100 can perform a call connection or a call rejection for the call connection request transmitted by the network system 200 according to a user's control. At this time, the dual SIM card terminal 100 can output various screens according to the feature of the received call connection request message. Hereinafter, the configuration of the dual SIM card terminal 100 will be explained.

The wireless communication unit 110 performs forming of a communication channel for a voice call, forming of a communication channel for a video call, forming of a communication channel for data transmission, and the like, according to the control of the controller 160. That is, the wireless communication unit 110 can form a voice call channel, a data communication data and a video call channel between mobile communication systems. To this end, the wireless communication unit 110 may include a wireless frequency transmission unit, which up-converts and amplifies the frequency of the transmitted signals, and a wireless frequency reception unit, which low-noise-amplifies and down-converts the frequency of the received signals. More particularly, the wireless communication unit 110 can transmit and receive signals used for searching a base station, based on one of the first SIM card 171 and the second SIM card 172, and support signal transmission and reception for the camping-on to the found base station. Such a wireless communication unit 110 can transmit a message including information, which indicates that the terminal is a dual SIM card terminal, to the network system 200 according to the control of the controller 160. In addition, the wireless communication unit 110 can receive a call connection request message based on the first SIM card 171 from the network system 200. In addition, the wireless communication unit 110 can receive a call connection request message, which is based on the second SIM card 172 and is switched to the first SIM card 171, from the network system 200.

The input unit 120 includes a multiple of input keys and function keys for receiving the input of number or letter information and for setting various functions. The function keys may include a direction key, a side key, a shortcut key, and the like, which are set to perform a certain function. Furthermore, the input unit 120 generates a key signal related to a user's setting and a function control of the dual SIM card terminal 100, and transmits the generated key signal to the controller 160. More particularly, the input unit 120 can select one of the SIM cards included in the dual SIM card terminal 100, and generate an input signal for activating a communication function, an input signal for activating a certain user function or a file replay function that are supported by the first SIM card 171 and the second SIM card 172, an input signal for searching a file stored in each SIM card, an input signal for selecting a file, and the like, and can transmit the generated input signals to the controller 160. Furthermore, when a call connection request message is received, the input unit 120 can generate an input signal for accepting the call connection or an input signal for rejecting the call connection according to a user's control. The input unit 120 can generate at least one of an input signal for setting a setting mode for a call switch request between SIM cards, an input signal for setting call switch request information that requests a communication message, which is supposed to be transmitted to the second SIM card 172, to be call-switched to the phone number of the first SIM card 171, and an input signal for setting call switch request information that requests switching the call to the phone number of the first SIM card 171 and for transmitting the switched call when there is no reply until a certain time passes after transmitting a communication message to the second SIM card 172 according to a user's request.

The audio processing unit 130 includes audio data that is transmitted and received during the call, audio data included in a message, a speaker (SPK) for outputting audio data that is stored in the storage unit 150, and a microphone (MIC) for collecting a user's voice or other audio signals during a call. Such an audio processing unit 130 can output a first alarm for reception of a call connection request message based on the first SIM card 171 in the state where the first SIM card 171 is activated, and a second alarm for reception of a call connection request message which has been call-switched to the first SIM card 171 based on the second SIM card 172. The first alarm and the second alarm may include the same audio data or different audio data for distinction. The alarm output function of the audio processing unit 130 may be omitted according to a user's setting.

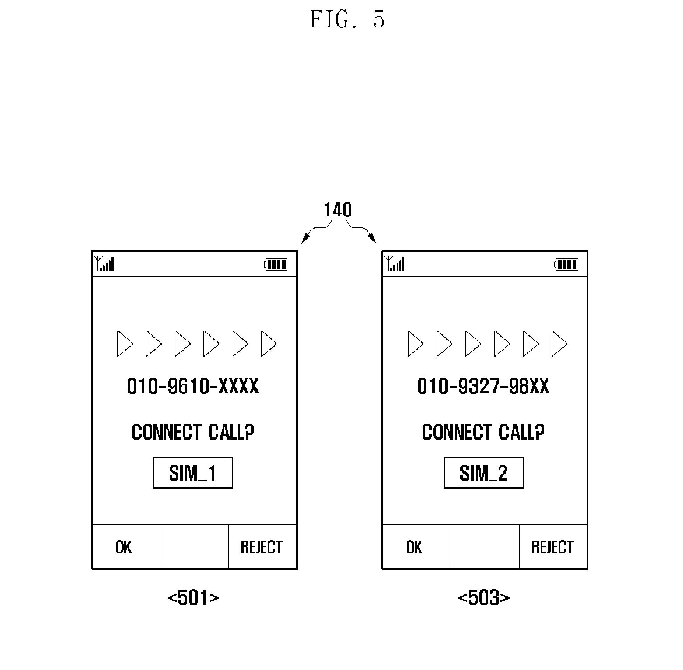

The display unit 140 displays information inputted by a user or information provided to a user as well as various menus of the dual SIM card terminal 100. That is, the display unit 140 can provide various screens according to the use of the portable terminal, such as an idle screen, a menu screen, a message writing screen, a calling screen, a game screen, a music replay screen, and the like. Such a display unit 140 can be formed of a Liquid Crystal Display (LCD), an Organic Light Emitting Diode (OLED), and the like, and in a case where the LCD or the OLED is formed as a touch screen, the display unit 140 can be included in the input means. To this end, the display unit 140 can support a touch screen function by including a display panel and a touch sensor disposed on the display panel. More particularly, the display unit 140 can output a user function support screen operated based on the first SIM card 171, and a user function support screen operated based on the second SIM card 172. When the first SIM card 171 supports a communication function, the second SIM card 172 can be used in supporting other user functions exempting the communication function. Furthermore, when the second SIM card 172 is set to support the communication function, the first SIM card 171 can be used in supporting other user functions exempting the communication function. Furthermore, when the first SIM card 171 supports the communication function and a call connection request is received based on the first SIM card 171, the display unit 140 can output a screen according thereto. The display unit 140 can output an alarm screen for reception of a call connection request message based on the first SIM card 171. In addition, when the first SIM card 171 supports the communication function and the second SIM card 172 is registered in the network system while not supporting the current communication function, if the call, which is supported to be transmitted to the second SIM card 172, is transmitted to the first SIM card 171 by a call switch by the network system 200, the display unit 140 can output information, which indicates that the call connection request message is a call-switched message. In contrast, when the second SIM card 172 supports the communication function and the first SIM card 171 is registered in the network system while not supporting the current communication function, the display unit 140 can separately output a screen for a call connection request message transmitted to the second SIM card 172 and a screen for the call connection request message call-switched to the second SIM card 172. An example of a user interface presented on the display unit 140 will be explained with reference to FIG. 5.

The storage unit 150 can store an application program for replaying various stored files as well as an application program for operating a function according to an exemplary embodiment of the present invention, and can store a key map, a menu map, and the like, for operating a touch screen when the dual SIM card terminal adopts a touch screen. Here, the key map or the menu map can be made of various forms. That is, the key map can be a keyboard map, a 3*4 map, a QWERTY key map, and the like, can also be a control key map for controlling operation of an application program that is currently activated, and can also be a menu map having various menus provided by the portable terminal as items. Such a storage unit 150 can include a program area and a data area in a broad sense.

The program area can store an operating system for booting the dual SIM card terminal 100 and for operating each of the above configuration, and an application program for replaying various files, for example, a web browser for connecting to an Internet server, an image output application program for replaying photos, and the like, and a moving picture replay application program. More particularly, the program area can store a user function support program per SIM card, and can particularly store a call support program per SIM card.

The data area is an area where data, which is generated according to the use of a portable terminal, is stored, and can store various sets of content. Furthermore, when the display unit 140 is implemented as a touch screen, the data area can store a user input inputted through the touch screen. In addition, the data area can store information received based on the first SIM card 171 or the second SIM card 172.

The SIM interface 170 provides space into which the first SIM card 171 and the second SIM card 172 can be inserted. Furthermore, if the first SIM card 171 and the second SIM card 172 are inserted into the SIM interface 170, a signal line, which can connect the first SIM card 171 and the second SIM card 172 with the controller 160, is provided. As such, if the first SIM card 171 and the second SIM card 172 are inserted into the SIM interface 170, communication with the controller 160 can be performed through the signal lines prepared in the SIM interface 170. Furthermore, one of the first SIM card 171 and the second SIM card 172 can perform a communication function based on the wireless communication unit 110 according to preset schedule information or a user's selection. When a certain SIM card is operating a communication function, the other SIM card can provide a user function supported by the SIM card or information stored in the SIM card to the controller 160 according to the control of the controller 160. The above-described first SIM card 171 and the second SIM card 172 can form a base station and a communication channel based on its respective unique identification information, and perform a communication function based on the phone number corresponding to the unique identification information. Generally, each SIM card applies for subscription to a service provider, which provides a communication network based on a certain base station at the time of purchasing the dual SIM card terminal 100 or at the time of purchasing each SIM card, and each SIM card can be given a phone number given by the service provider. As such, if a certain SIM card approaches the network system 200 through the base station, the network system 200 can confirm the phone number allocated to the SIM card based on the unique identification information of the SIM card, and can support a communication function based on the phone number.

The controller 160 performs an initialization process by controlling a power supply to each component of the portable terminal, and can perform a signal control for a call switch based on a SIM card that currently does not support the communication function for each component if the initialization process is completed. More specifically, the controller 160 can perform a booting process based on a certain SIM card, which is set as a default value, or a certain SIM card, which is set according to a user's selection, for example, a first SIM card 171, in the booting process where power is supplied to the portable terminal 101. In this process, the controller 160 can perform a communication function based on the first SIM card 171 by searching for a base station based on information stored in the first SIM card 171, and camping on based on the found base station. In this process, the controller 160 can request a call switch for a call connection request message transmitted to the second SIM card 172, which does not operate a communication function, by transmitting a message, which includes information that indicates that the terminal is a terminal including a dual SIM card, to the network system 200 including the base station. The controller 160 can transmit a message shown in Table 1 below.

**Table 1**

| | Mobile station classmark 2 IEI | | | | | | |
|---|---|---|---|---|---|---|---|
| Length of mobile station classmark 2 contents | | | | | | | |
| 0 | Revision Level | | ES | A5/1 | Radio Frequency (RF) power Capability | | |
| Spare | | | IND | | | | |
| 0 | PS | SS Screen Indicator | | SM capa | Voice Broadcast Service (VBS) | Voice Group Call Service (VGCS) | FC |
| Spare | capa. | | | | | | |
| CM3 | 0 | LCSVA | UCS2 | SoLSA | CMSP | A5/3 | A5/2 |
| | Spare | CAP | | | | | |

The above described message shows parameters included in the classmark message among signaling messages which inform the network system 200 of performance and the type of the dual SIM card terminal 100. The controller 160 of the dual SIM card terminal 100 can define the value of the areas, which are indicated as "spare" among the signaling messages, to indicate that the terminal is a dual SIM card terminal 100 according to a preset agreement with the network system, and can transmit the signaling message to the network system 200. Thereafter, the controller 160 can transmit the phone number information of the second SIM card 172 to the network system 200. When the network system stores and manages information related to the dual SIM card terminal 100, the controller 160 may not separately transmit the second SIM card 172 phone number information to the network system 200. Furthermore, the controller 160 can transmit a call switch setting request message to the network system, the message which instructs whether a call switch will be set for a call connection request message transmitted to the SIM card where currently the communication function is not supported by newly defining some parameters of the signaling message. The call switch setting request message may include one of request information, which requests to transmit a call connection request, which is transmitted to the second SIM card 172 that does not operate a communication function, directly to the first SIM card 171 without a separate transmission attempt, and request information, which requests to transmit the call connection request message to the first SIM card 171 if there is no replay for a certain period of time after the call connection request message is transmitted to the second SIM card 172. The network system 200 can perform a call switch setting for a certain SIM card according to the call switch setting request message, and can transmit the call connection request message, which is transmitted to the corresponding SIM card, to the designated other SIM card. As described above, the controller 160 described a message including dual SIM card 100 indication information and request information as a classmark message, but exemplary embodiments of the present invention are not limited to the description, and the controller 160 can transmit the above described information to the network system 200 through another signaling message, a newly defined message, and the like.

Furthermore, if a call connection request message is received through the wireless communication unit 110, the controller 160 can determine the attribute of the received call connection request message. That is, the controller 160 can determine whether the call connection request message is a call connection request message based on the first SIM card 171 or a message, which was supposed to be transmitted to the second SIM card 172, but was received after the call switch, and can output an alarm related to the determined fact through one of the display unit 140 and the audio processing unit 130. Similarly, if the dual SIM card terminal 100 receives the call connection request message, it can determine whether the received message is a call connection request message transmitted to the first SIM card 171 or a call connection request message transmitted to the second SIM card 172.

Furthermore, a call connection request message has been explained above, but exemplary embodiments of the present invention are not limited to the call connection request message. That is, the dual SIM card terminal 100 can also be applied to a message service as well as a call. That is, if a message service is transmitted to the dual SIM card terminal 100, which performs communication based on the first SIM card 171, with the phone number registered based on the second SIM card 172, the network system 200 can call-switch the message to the first SIM card 171 according to preset registration information or setting information, and thus a corresponding short message, a multimedia message, or an e-mail would not be missed even though the dual SIM card terminal 100 does not operate the second SIM card 172 as a communication function.

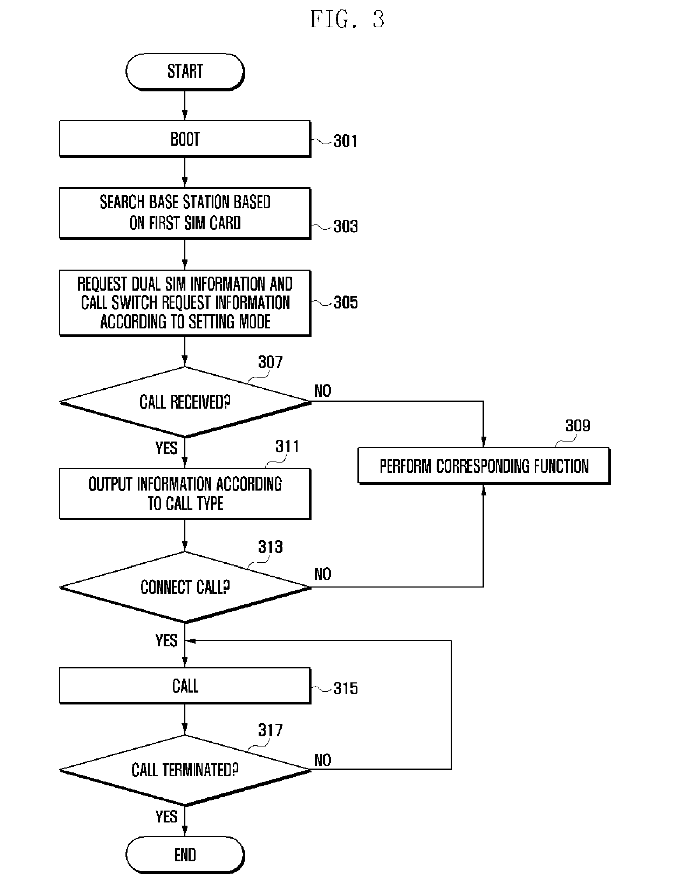

FIG. 3 is a flowchart illustrating a method for operating a dual SIM card terminal according to an exemplary embodiment of the present invention.

Referring to FIG. 3, if power is first supplied to the dual SIM card terminal 100, the controller 160 of the dual SIM card terminal 100 can perform booting at step 301. While performing booting, the controller 160 can select one of the first SIM card 171 or the second SIM card 172, which are inserted into the SIM interface 170, and can perform a search for a base station based on the selected SIM card, for example, the first SIM card 171 at step 303.

The search for the base station for camping is completed, the controller 160 can transmit dual SIM information or call switch request information to the network system 200 according to the setting mode at step 305. Here, the setting mode can be a mode for setting whether an automatic call switch function of the dual SIM card terminal 100 would be performed. In addition, the setting mode includes a mode that the network system 200 directly performs a call switch to a preset SIM card, a mode that performs a communication function without performing the process of transmitting and confirming a separate message to the phone number of a certain SIM card, and a mode that does not perform a communication function when an automatic call switch function is performed. Furthermore, the setting mode can include a mode that performs a call switch or a message service switch to the phone number of a preset SIM card if there is no reply after a certain period of time passes after transmitting and confirming a phone number message of a certain SIM card. The controller 160 can determine the above described setting mode, and can transmit information, which indicates that a terminal in the process of camping on the first SIM card 171 is a dual SIM card terminal 100, and call switch request information to the network system depending on the setting mode. Here, if a call connection request is generated to the second SIM card 172 in the above described setting mode, the call switch request information may include one of information, which requests to switch the call or the message service to the first SIM card 171 without transmitting a separate confirmation message to the phone number of the second SIM card 172, and information, which requests to perform a call switch or a message service switch to the first SIM card 171 after a certain period of time passes after the confirmation message is transmitted.

Thereafter, the controller 160 can determine whether a call reception is generated from the network system 200 at step 307. In this process, when a separate call connection request message is not received from the network system 200, the controller 160 can perform a user function supported by the dual SIM card terminal 100, for example, a file search function, a file replay function, a broadcast receiving function, and the like, at step 309.

In contrast, when a call reception occurs at step 307, the controller 160 can output information according to the call type at step 311. More specifically, the controller 160 can determine whether a call connection request message received from the network system 200 is a message received to the phone number of the first SIM card 171 or a message that was supposed to be transmitted to the phone number of the second SIM card 172 and was call-switched, and can output the identification information of the message in at least one of the display unit 140 and the audio processing unit 130. Here, the controller 160 can indicate only a call reception according to a user's setting without separately outputting information according to the attribute of the call.

Thereafter, the controller 160 can determine whether an input signal for a call connection is inputted from the input unit 120 or the display unit 140 with a touch screen function for a received call at step 313. In this step, when an input signal for a call connection is not generated, the controller 160 may support performance of a corresponding function requested by a user without performing a call connection at step 309. At this time, if an input signal for a call rejection is generated, the controller 160 may transmit a call rejection message to the network system or may stop notification for the call reception within the portable terminal itself.

If an input signal for a call connection is generated at step 313, the controller 160 can accept a call connection, and can control transmission and reception of at least one of audio data and video data generated in the process of call connection at step 315. Thereafter, the controller 160 can determine whether a call has been terminated at step 317, and when input signal for call termination is not generated, the controller 160 can perform step 315. If the call is terminated, the controller 160 can perform a process for terminating a call function, and can support a corresponding function supported by the dual SIM card terminal 100, for example, an idle screen output function, a slip mode operation function, a certain user function operation, and the like.

Furthermore, in the above description, when a message service is received instead of a call at step 307, the controller 160 can receive the message service, that is, one of a short message, a multimedia message or an e-mail, to the phone number of the first SIM card 171. At this time, the controller 160 can determine transmission information of the received message service, and can output identification information for identifying whether the message service will be transmitted to the phone number of the first SIM card 171 or the phone number of the second SIM card 172, to at least one of the display unit 140 and the audio processing unit 130.

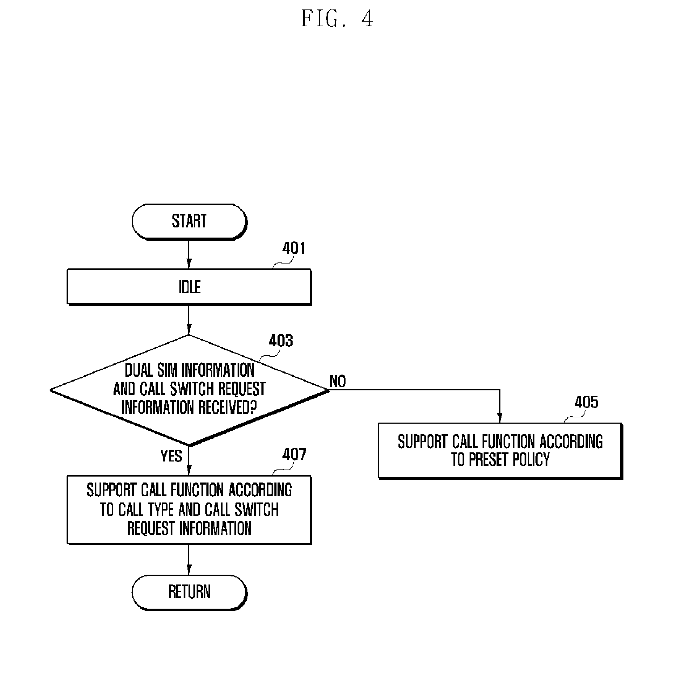

FIG. 4 is a flowchart illustrating a method for operating an automatic call switch of a network system according to an exemplary embodiment of the present invention.

Referring to FIG. 4, a method for operating a network system can maintain the components of each system in a state for supporting a communication function, that is, an idle state, by controlling supplied power at step 401.

Thereafter, the network system 200 can determine whether dual SIM information and call switch request information is received from a certain terminal in the process of camping at step 403. In this process, if separate dual SIM information and call switch request information is not received, the network system 200 can support a call function according to a preset policy at step 405.

In contrast, if dual SIM information and call switch request information is received at step 403, the network system 200 can support a call function according to the call type and call switch request information at step 407. To this end, the network system registers SIM card information of a terminal, which transmitted dual SIM information, and if a call connection request is generated to the phone number corresponding to the SIM card, the network system 200 can determine call switch request information and transmit to the SIM card, which camped on the call connection communication function, according to the call connection request information. For example, if the first SIM card 171 of a certain terminal performs a camping process to support the communication function, the network system 200 can transmit the call connection request message to the phone number of the first SIM card 171 if the call connection request is generated to the phone number of the first SIM card 171. Furthermore, if a call connection request is generated to the phone number of the second SIM card 172, the network system 200 can automatically switch the call to the phone number of the first SIM card 171 if there is no reply for a certain period of time after transmitting the call connection message to the phone number of the second SIM card 172. Furthermore, if a call connection request is generated to the phone number of the second SIM card 172 according to the call switch request information, the network system 200 can transmit the call connection request message by automatically switching the call to the phone number of the first SIM card 171.

Furthermore, if a message service is transmitted to the phone number of the second SIM card 172 according to the call switch request information, the network system 200 can transmit the message service to the phone number of the first SIM card 171 by automatically switching the call to the phone number of the first SIM card 171. As described above, the method for supporting an automatic call switch of a dual SIM card terminal transmits a call or a message service to the phone number of the SIM card, which performs the communication function, even though the call or the message service to the phone number of a SIM card, which does not currently support the communication function, is transmitted. As such, the method for supporting an automatic call switch of the dual SIM card terminal 100 can manage and determine a call or a message service transmitted to all SIM cards regardless of the SIM card that is currently operated.

The method of operating a terminal and a network system for a method for supporting an automatic call switch of a dual SIM card terminal 100 according to an exemplary embodiment of the present invention has been explained above. Hereinafter, a call reception screen according to an automatic call switch of the dual SIM card terminal 100 will be described with reference to FIG. 5. Furthermore, the screen interface explained below relates to a schematic screen for supporting a call reception of a terminal that operates a plurality of SIM cards, and can be modified according to a designer's intention.

FIG. 5 illustrates a screen interface according to a call switch operation according to an exemplary embodiment of the present invention

Referring to FIG. 5, if a call connection request message is received from the network system 200, the dual SIM card terminal 100 can determine the type of the received call connection request message. To this end, the network system 200 can transmit the message, which includes information that can identify whether the call connection request message is a call connection request message transmitted to the phone number of the first SIM card 171, or a call-switched message. Thereafter, the controller 160 can determine the type of the call connection request message by determining a certain area of the call connection request message, that is, an area of information, which indicates whether the message has been call-switched.

Furthermore, when the call connection request message is a message transmitted to the phone number of the first SIM card 171 without a call switch by determining the message type, the controller 160 can output unique identification information, which indicates that a call based on the first SIM card 171 has been received, to the display unit 140 like screen 501. Furthermore, when the call connection message is an automatically call-switched message by determining the message type, the controller 160 can output the unique identification information, which indicates that an automatically switched call of the second SIM card 172 has been received, to the display unit 140 like screen 503. In addition, the controller can selectively output an alarm sound or a bell sound, which are distinguished from each other, depending on the type of the received call through the audio processing unit 130. That is, the controller 160 can output audio data, which is set per SIM card according to whether the call has been switched, to the display unit 140 along with the displayed information or independently through the audio processing unit 130.

When a message service is received from the network system 200, the controller 160 can determine information received in connection with the message service, and can determine the information type, that is, which SIM card's phone number the message has been transmitted to. Furthermore, the controller 160 can output information, which is distinguished according to the determined message, along with the message reception alarm. To this end, the network system 200 can transmit information related to the message service including information, which can identify the message according to the call switch as applied to the call connection request message in the message, to the dual SIM card terminal 100.

As described above, a method for operating a communication function of a dual SIM card terminal and a dual SIM card terminal supporting the same according to an exemplary embodiment of the present invention can support a user to receive and manage a communication message related to a communication function related to another SIM card.

Furthermore, the above-described dual SIM card terminal 100 may further include components, which have not been described above, such as a near field communication module for near field communication, a camera module for taking still pictures and moving pictures, an interface for data transmission and reception by the wire communication method or wireless communication method of the dual SIM card terminal 100, an Internet communication module that performs an Internet function by communicating with an Internet network, a digital broadcast module that receives and replays a digital broadcast, and the like. Not all such components can be listed here because they are modified in various manners due to the convergence trend of digital devices, but the device can be configured to further include components of the same level as that of the above-mentioned components. Furthermore, some components of the dual SIM card terminal 100 can be exempted or substituted by other components according to the provided type, which can be easily understood by those of ordinary skill in the art. Furthermore, the dual SIM card terminal 100 can include devices that can perform a call switch request setting to the network system. For example, the dual SIM card terminal 100 can include all information communication devices, multimedia devices and application devices thereof, such as a Portable Multimedia Player (PMP), a Personal Digital Assistant (PDA), a music player (e.g., a Motion Pictures Expert Group (MPEG-1 or MPEG-2) Audio Layer-3 (MP3) player), a portable game terminal, a smart phone, a notebook computer and a handheld Personal Computer (PC), as well as all mobile communication terminals operated under communication protocols corresponding to various communication systems.

While the invention has been shown and described with reference to certain exemplary embodiments thereof, it will be understood by those skilled in the art that various changes in form and details may be made therein without departing from spirit and scope of the invention as defined by the appended claims and their equivalents.

## Claims

1. A method for operating a dual Subscriber Identity Module (SIM) card terminal, the method comprising:
performing a camping process based on a first SIM card by a terminal including a plurality of SIM cards;
requesting a call switch so that a communication message, which is transmitted to at least one other SIM card that does not currently support a communication function, is transmitted to the first SIM card by the terminal; and
call-switching a communication message, which is transmitted to at least one other SIM card, so that the communication message is transmitted to the first SIM card by a network system according to the call switch request.

2. The method of claim 1, wherein the requesting of the call switch comprises:
transmitting information, which indicates that the terminal is a terminal including a plurality of SIM cards, to the network system; and
transmitting call switch request information that requests the call switch.

3. The method of claim 1, wherein the requesting of the call switch comprises at least one of:
transmitting call switch request information, which requests a communication message, which is supposed to be transmitted to at least one other SIM card, to be call-switched to the phone number of the first SIM card and to be transmitted according to the call switch request setting mode of the terminal, to the network system; and
transmitting call switch request information, which requests the communication message to be call-switched to the phone number of the first SIM card and to be transmitted if there is no reply until a certain period of time passes after transmitting the communication message to the at least one other SIM card, to the network system.

4. The method of claim 3, further comprising:
call-switching a communication message, which is supposed to be transmitted to the at least one other SIM card according to the call switch request information, and transmitting the call-switched communication message to the phone number of the first SIM card by the network system.

5. The method of claim 4, wherein the transmitting of the communication message comprises at least one of:
call-switching a call connection request message, which is supposed to be transmitted to the at least one other SIM card, and transmitting the call-switched call connection request message to the phone number of the first SIM card by the network system; and
call-switching information related to a message service, which informs that there is a message that will be transmitted to the at least one other SIM card, and transmitting the call-switched information to the phone number of the first SIM card by the network system.

6. The method of claim 4, further comprising:
receiving the call-switched communication message to the phone number of the first SIM card by the terminal.

7. The method of claim 6, further comprising:
outputting information for identifying whether the received communication message has been call-switched by the terminal.

8. The method of claim 7, wherein the outputting of the information comprises at least one of:
outputting unique identification information of each SIM card along with a call reception in a display unit; and
outputting audio data which is set per SIM card according to whether the call has been switched.

9. A dual Subscriber Identity Module (SIM) card terminal, the terminal comprising:
a wireless communication unit that supports signal transmission and reception for supporting a communication function;
a plurality of SIM cards that perform a camping to a base station and provide information for supporting a communication function based on the wireless communication unit; and
a SIM card interface that provides space into which the plurality of SIM cards can be inserted, and a signal line for communication between the plurality of SIM cards and a controller,
wherein the controller performs a base station search and camping based on a first SIM card selected according to preset information and input signals among the plurality of SIM cards which have been inserted into the SIM card interface, and transmits a message, which requests a call switch so that a communication message, which is transmitted to at least one other SIM card exempting the first SIM card, is transmitted based on the first SIM card, to the base station.

10. The terminal of claim 9, further comprising:
a display unit for outputting information for identifying whether communication messages, which are transmitted to the first SIM card or the at least one other SIM card, have been call-switched.

11. The terminal of claim 9, further comprising:
an audio processing unit for outputting audio data which is set per SIM card when the communication message is received.

12. The terminal of claim 9, wherein the controller transmits a message, which includes information that indicates that the terminal is a terminal including a plurality of SIM cards, and call switch request information that requests the call switch, to the base station.

13. The terminal of claim 9, further comprising an input unit for generating at least one of:
an input signal for setting a setting mode for the call switch request;
an input signal for setting call switch request information that requests to call-switch a communication message, which is supposed to be transmitted to the at least one other SIM card, to the phone number of the first SIM card, and transmits the call-switched communication message; and
an input signal for setting call switch request information that requests to call-switch the communication message to the phone number of the first SIM card, and transmits the call-switched communication message when there is no reply until a certain period of time passes after the communication message is transmitted to the at least one other SIM card.

14. A network system for supporting a call switch of a dual Subscriber Identity Module (SIM) card terminal, the system comprising:
a base station that forms a communication channel with a certain SIM card included in the dual SIM card terminal; and
a mobile service center for transmitting a communication message, which is supposed to be transmitted to another SIM card exempting the certain SIM card, to the phone number of the certain SIM card according to the request of the dual SIM card terminal.

15. The system of claim 14, wherein the mobile service center call-switches a communication message, which is supposed to be transmitted to the another SIM card, to the phone number of the first SIM card, and transmits the call-switched communication message according to the request of the dual SIM card terminal,
or call-switches the communication message to the phone number of the first SIM card and transmits the call-switched communication message when there is no reply until a certain period of time passes after the communication message is transmitted to the another SIM card.
